**Europäisches Patentamt**

**European Patent Office**

**Office européen des brevets**

(19)

(11) Veröffentlichungsnummer: **0 164 516**
**B1**

## EUROPÄISCHE PATENTSCHRIFT

(12)

(45) Veröffentlichungstag der Patentschrift:
25.11.87

(51) Int. Cl.⁴: **B 23 B 31/12**

(21) Anmeldenummer: **85104213.5**

(22) Anmeldetag: **06.04.85**

(54) Bohrfutter.

(30) Priorität: **15.06.84 DE 3422195**
**16.06.84 DE 3422539**

(43) Veröffentlichungstag der Anmeldung:
**18.12.85 Patentblatt 85/51**

(45) Bekanntmachung des Hinweises auf die Patenterteilung:
**25.11.87 Patentblatt 87/48**

(84) Benannte Vertragsstaaten:
**CH DE FR GB IT LI**

(56) Entgegenhaltungen:
**DE-A-2 348 299**
**FR-A-2 011 130**
**FR-A-2 417 363**
**GB-A-171 993**

(73) Patentinhaber: **Röhm, Günter Horst, Heinrich-Röhm- Strasse 50, D-7927 Sontheim (DE)**

(72) Erfinder: **Röhm, Günter Horst, Heinrich- Röhm-Strasse 50, D-7927 Sontheim (DE)**

(74) Vertreter: **Fay, Hermann, Dipl.- Phys. Dr., Ensingerstrasse 21 Postfach 1767, D-7900 Ulm (Donau) (DE)**

## Beschreibung

Die Erfindung betrifft ein Bohrfutter mit einem an eine Bohrspindel anschließbaren Futterkörper, in dem zur Bildung einer Aufnahme für das Bohrverkzeug Futterbacken geführt sind, die durch einem am Futterkörper drehbar und axial unverschiebbar geführten Stellring verstellbar sind, und mit einer am Futterkörper axial verschiebbaren und im Drehrichtung feststellbaren Sperrhülse zum Verriegeln des Stellrings, wobei die Sperrhülse in Verschiebungsrichtung gegen den Stellring unter der Kraft einer Feder steht und am Futterkörper mindestens ein Anschlagkopf vorgesehen ist, der in eine Aussparung in der Wand der Sperrhülse greift, insbes. Bohrfutter, dessen Futterkörper einen in der Aufnahme für das Bohrverkzeug mündenden axialen Durchgang aufweist, durch den hindurch beim Schlagbohren die Schlagwirkung von der Bohrspindel unmittelbar auf das in der Aufnahme befindliche Ende des Bohrwerkzeugs übertragber ist.

Bei einen beispielsweise aus dem DE-GM-83 27 665 bekannten Bohrfutter dieser Art wird die Aussparung von einen Schlitz in der Wand der Sperrhülse und der Anschlagkopf von den in den Schlitz vorstehenden Ende eines radial in eine Bohrung des Futterkörpers eingesetzten Stiftes von kreisrunden Querschnitt gebildet. Durch Anschlag der Schlitzseitenwände am Stiftende ist die Sperrhülse gegen Verdrehungen am Futterkörper gesichert. Im übrigen ist die Sperrhülse axial zwischen zwei Stellungen verschiebbar und an ihrem dem Stellring zugewandten Ende mit Zähnen versehen, welchen eine Gegenverzahnung am Stellring zugeordnet ist. In der gegen den Stellring vorgeschobenen Stellung der Sperrhülse greifen ihre Zähne in die Gegenverzahnung und sperren dadurch den Stellring gegen unerwünschtes Verdrehen. In der vom Stellring gegen die Kraft der Feder zurückgeschobenen Stellung stehen die Zähne der Sperrhülse dagegen außer Eingriff mit der Gegenverzahnung des Stellrings, so daß der Stellring nach Wunsch verdreht werden kann. Jedoch besteht keine Möglichkeit, die Sperrhülse in ihrer außer Eingriff mit der Gegenverzahnung des Stellringes befindlichen Stellung zu fixieren. - Die durch den Sperring bewirkte Verdrehungssicherung des Stellringes ist besonders im Schlagbohrbetrieb von Bedeutung, denn sie verhindert, daß sich das Bohrfutter unter den Beanspruchungen des Schlagbohrbetriebs selbsttätig löst oder weiter so verspannt, daß ein an sich gewolltes axiales Verschiebungsspiel des Bohrwerkzeuges in der von den Futterbacken gebildeten Aufnahme verloren geht und/oder das Bohrfutter sich so fest zieht, daß es zum Wechseln des Bohrwerkzeuges nur noch mit Mühe geöffnet werden kann. Entsprechend groß sind die in Umfangsrichtung der Sperrhülse wirksamen Kräfte, die durch den Anschlag der Schlitzseitenwände an Stiftende aufgenommen werden müssen. Dieser Anschlag ist im wesentlichen linienhaft, so daß sich hohe spezifische Werkstoffbeanspruchungen sowohl an den Schlitzseitenwänden als auch am Stiftende ergeben, die leicht zu bleibenden Verformungen an den Schlitzseitenwänden und dem Stiftende und im Ergebnis zu bleibenden Beschädigungen des Bohrfutters führen können.

Der Erfindung liegt die Aufgabe zugrunde, ein Bohrfutter der eingangs genannten Art so auszubilden, daß die Sperrhülse in ihrer außer Eingriff mit der Gegenverzahnung des Stellrings befindlichen Stellung in einfacher Weise fixiert werden kann, und daß zwischen dem Anschlagkopf und den Wanden der ihn aufnehmenden Aussparung auch große, im Schlagbohrbetrieb auftretende Beanspruchungen ohne Gefahr bleibender Werkstoffverformungen aufgenommen werden konnen.

Diese Aufgabe wird nach der Erfindung dadurch gelöst, daß die Aussparung in der Wand der Sperrhülse aus zwei nebeneinander verlaufenden, verschieden langen axialen Nuten gebildet ist, die an dem dem Stellring zugewandten Ende für den Eintritt des Anschlagkopfes offen sind, wozu die Sperrhülse auf dem Futterkörper so verdrehbar ist, daß entweder die eine oder die andere der beiden Nuten mit dem Anschlagkopf axial fluchtet. Desweiteren ist die Erfindung dadurch gekennzeichnet, daß der Anschlagkopf in Längsrichtung der Nuten stegartig verlängert ist und mit seinen Steglängsseiten Anschlagflächen für die Nutseitenwände bildet.

Der durch die Erfindung erreichte Fortschritt besteht im wesentlichen darin, daß die Sperrhülse bei in der kürzeren Nut befindlichem Anschlagkopf gegen einen Sperreingriff am Stellring fixiert ist, und daß der Anschlagkopf über seine Steglängsseiten zur großflähigen Anlage an den Nutseitenwänden kommt, so daß auch bei hohen, zwischen dem Anschlagkopf und der Sperrhülse zu übertragenden Kräften die spezifischen Flächenbelastungen so gering bleiben, daß bleibende Werkstoffverformungen mit Sicherheit vermieden werden.

In bevorzugter Ausführungsform bildet der Anschlagkopf das Ende eines Stiftes, der radial in eine Bohrung des Futterkörpers eingesteckt ist und den Anschlagkopf am Futterkörper verankert. Gegen radiales Herausrutschen aus dem Futterkörper ist der Stift durch Anschlag des Anschlagkopfes am Boden der Nuten gesichert. Im übrigen empfiehlt es sich, daß der Anschlagkopf am bohrerseitigen Ende eine ebene Stirnfläche aufweist, mit welcher der Anschlagkopf einer Schulter des Futterkörpers verdrehungssicher aufsitzt, so daß sich im Ergebnis der Anschlagkopf nicht um die Achse des Stiftes verdrehen kann.

Befindet sich der Anschlagkopf in der kürzeren der beiden Nuten, liegt die Sperrhülse unter der Kraft der Feder mit dem stirnseitigen Nutende am Anschlagkopf in einer solchen Stellung an, daß die Sperrhülse außer Eingriff am Stellring steht. Die längere der beiden Nuten ist dagegen so lang, daß die Sperrhülse am Stellring zum verriegelnden Eingriff gelangt, so daß der in der längeren Nut befindliche, Anschlagkopf nur die Verdrehungssicherung der Sperrhülse bewirkt, nicht aber auch deren axiale Stellung festlegt. Die längere der beiden Nuten kann daher axial an beiden Enden offen sein, was aus Gründen einer einfacheren Montage von Vorteil sein kann.

Um den für den Übergang des Anschlagkopfes zwischen den beiden Nuten auszuführenden axialen Verschiebungsweg der Sperrhülse möglichst kurz zu halten, können nach einem weiteren Vorschlag der Erfindung die Nuten an ihrem bohrerseitigen Ende eine freie Querverbindung aufweist, deren Höhe in Längsrichtung der Nuten geringer als die Steglänge des Anschlagkopfes ist. Die der Querverbindung beidseits gegenüberliegenden Teile der äußeren Seitenwand beider Nuten können dann zugleich den Drehbereich der Sperrhülse begrenzende Anschläge für den Anschlagkopf bilden.

Im folgenden wird die Erfindung an einem in der Zeichnung dargestellten Ausführungsbeispiel näher erläutert; es zeigen:

Fig. 1 einen Axialschnitt durch ein Bohrfutter nach der Erfindung,

Fig. 2 einen Schnitt in Richtung II-II durch das Bohrfutter nach Fig. 1,

Fig. 3 einen Teilschnitt in Richtung III-III durch das Bohrfutter nach Fig. 1.

In der Zeichnung ist die Bohrspindel mit 1, das von der Bohrspindel angetriebene Bohrfutter allgemein mit 2 bezeichnet. Das Bohrfutter 2 ist drehschlüssig auf der Bohrspindel 1 angeordnet, wozu zwei Zapfen 3 dienen, die die axiale Verschiebbarkeit des Bohrfutters 2 auf der Bohrspindel 1 nicht behindern, weil die ihnen zugeordneten Aufnahmen 4 im Futterkörper 5 axial länger als die Zapfen 3 sind. Spindelseitig sitzen die Zapfen 3 in Ausnehmungen eines Spindelbundes 6, an dem das Bohrfutter 2 durch einen Federring 7 gesichert ist, der in einer Ringnut des Futterkörpers 5 liegt und den Spindelbund 6 hinterfaßt.

Die im Futterkörper 5 zentrisch verstellbaren Futterbacken 8 bilden gemeinsam eine Aufnahme 9 für das nicht dargestellte Bohrwerkzeug. In diese Aufnahme 9 mündet ein im Futterkörper 5 vorgesehener axialer Durchgang 10, der im Ausführungsbeispiel von der Bohrspindel 1 selbst, in anderen Fällen aber auch von einem in der hohlen Bohrspindel geführten Döpper durchgriffen ist, so daß die Schlagbewegung und Schlagwirkung von der Bohrspindel 1 unmittelbar auf das Ende des in der Aufnahme 9 zwischen den Futterbacken 8 gehaltenen Bohrwerkzeuges übertragen werden kann. Dabei ist der Futterkörper 5 und mit ihm das Bohrfutter 2 insgesamt von der Schlagwirkung der Bohrspindel 1 dadurch entkoppelt, daß der Spindelbund 6 sich in der für ihn im Futterkörper 5 vorgesehenen Aufnahme 11 axial in beiden Richtungen geringfügig mit freiem Spiel verschieben kann. Die Futterbacken 8 greifen mit einer Verzahnung 12 in das Innengewinde eines Stellringes 13, der in einer Ringnut des Futterkörpers 5 drehbar geführt ist. Um ihn in diese Ringnut einlegen zu können, ist der Stellring 13 quergeteilt. Die beiden Ringhälften werden von einer axial über den Stellring 13 geschobenen Stellhülse 14 zusammen gehalten. Der Stellring 13 kann außer von Hand mittels eines Spannschlüssels 15 betätigt werden, der am Futterkörper 5 angesetzt werden kann und ein Zahnritzel 16 aufweist, das in einen Zahnkranz 17 des Stellrings 13 greift. Weiter ist am Futterkörper 5 eine Sparrhülse 18 vorgesehen, die axial verschiebbar geführt und in Drehrichtung feststellbar ist. Die Sperrhülse 18 besitzt an ihren dem Stellring 13 zugewandten Rand Zähne 19, welchen eine Gegenverzahnung am Stellring 13 zugeordnet ist. In ihrer in der Zeichnung dargestellten, unter der Kraft einer Feder 20 gegen den Stellring 13 vorgeschobenen Stellung greifen die Zahne 19 der Sperrhülse 18 in die Gegenverzahnung des Stellrings 13 und sperren dadurch den Stellring 13 gegen Verdrehen. Um den Stellring 13 verdrehen zu können, muß die Sperrhülse 18 gegen die Kraft der Feder 20 axial zurückgeschoben werden, damit die Zähne 19 der Sperrhülse 18 außer Eingriff mit der Gegenverzahnung am Stellring 13 gelangen. Um die Sperrhülse 18 in dieser rückwärtigen Stellung zu halten und in jedem Fall gegen Drehbewegungen zu sichern, sind am Futterkörper 5 drei Anschlagköpfe 21 vorgesehen, die in je eine Aussparung in der Wand der Sperrhülse 18 greifen. Jede dieser Aussparungen ist aus zwei nebeneinander verlaufenden, verschieden langen axialen Nuten 22.1, 22.2 gebildet. An dem den Stellring 13 zugewandten Ende sind die Nuten 22.1, 22.2 für den Eintritt des Anschlagkopfes 21 offen. Um diesen Eintritt wahlweise in eine der Nuten 22.1, 22.2 zu ermöglichen, ist die Sperrhülse 18 auf dem Futterkörper 5 so verdrehbar, daß entweder die eine oder die andereder beiden Nuten 22.1, 22.2 mit dem Anschlagkopf 21 axial fluchtet. Der Anschlagkopf 21 selbst ist in Längsrichtung der Nuten 22.1, 22.2 stegartig verlängert und bildet mit seinen Steglängsseiten 21.1 Anschlagflächen für die Nutseitenwände 23. Im einzelnen bildet der Anschlagkopf 21 das Ende eines Stiftes 24, der radial in eine Bohrung des Futterkörpers 3 eingesteckt ist und den Anschlagkopf 21 am Futterkörper 5 verankert. Radial nach außen ist der Anschlagbpf 21 durch Anlage am Boden 25 der Nuten 22.1, 22.2 gesichert. Eine Verdrehungssicherung für den Anschlagkopf 21 wird dadurch erhalten, daß der Anschlagkopf 21 am bohrerseitigen Ende eine ebene Stirnfläche 21.2 aufweist, mit der der Anschlagkopf 21 einer Schulter 26 des Futterkörpers 5 verdrehungssicher aufsitzt. Die längere 22.2 der beiden Nuten ist an beiden Enden axial offen. Im übrigen sind die Nuten 22.1, 22.2 an ihren bohrerseitigen Enden mit einer freien Querverbindung 27 versehen, deren Höhe in Längsrichtung der Nuten 22.1, 22.2 geringer als die Steglänge des Anschlagkopfes 21 ist. Die der Querverbindung 27 beidseits gegenüberliegenden Teile 28 der äußeren Seitenwand 23 beider Nuten 22.1, 22.2 bilden für den Anschlagkopf 21 Anschläge, die den Drehbereich der Sperrhülse 18 begrenzen.

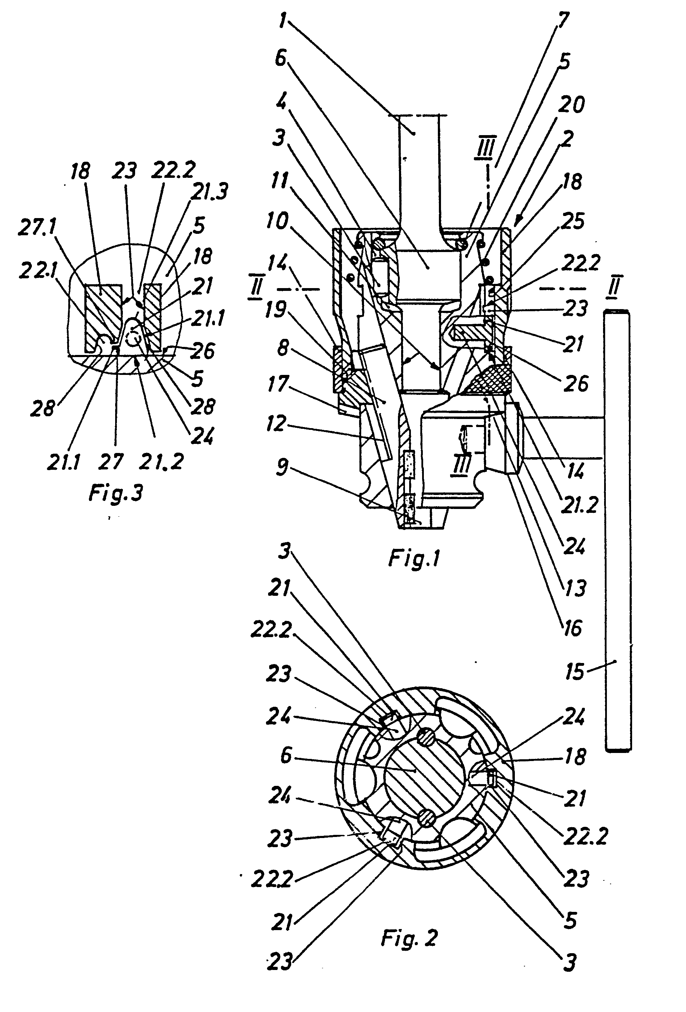

In dem in der Zeichnung dargestellten Zustand drückt die Feder 20 die Sperrhülse 18 ohne Behinderung durch den Anschlagkopf 21 axial gegen den Stellring 13, so daß die Zähne 19 der Sperrhülse 18 und die Gegenverzahnung des Stellrings 13 miteinander zum Eingriff kommen. Der in der längeren Nut 22.2 befindliche Anschlagkopf 21 sichert die Sperrhülse 18 und damit in Ergebnis auch den Stellring 13 gegen Verdrehen. Wird die Sperrhülse 18 gegen den Druck der Feder 20 axial soweit zurückgeschoben, daß das in Fig. 3 obere Ende 27.1 der freien Querverbindung 27 über dem oberen abgerundeten Ende 21.3 des Anschlagkopfes 21 liegt, so kann die Sperrhülse 18 soweit verdreht werden, daß die kürzere Mut 22.1 nit dem Anschlagkopf 21 fluchtet und der Anschlagkopf 21 in diese kürzere Nut 22.1 axial eintritt, wenn die Sperrhülse 18 losgelassen wird und sich unter der Kraft der Feder 20 vorverschiebt. Jedoch wird diese Vorverschiebung durch Anschlag des oberen Nutendes am Anschlagkopf 21 bereits in einer Stellung beendet, in der die Sperrhülse 18 noch außer Eingriff am Stellring 13 steht. Um beim Wechseln der Nuten 22.1, 22.2 das Einlaufen des Anschlagkopfes 21 in die jeweils neue Nut zu erleichtern, laufen die Nutseitenwande 23 am bohrerseitigen Ende der Nuten 22.1, 22.2 keilartig auseinander und bilden dadurch für den Anschlagkopf 21 ihn einfangende schräge Führungsflächen. Auch am Anschlagkopf 21 selbst können die Steglängsseiten 21.1 entsprechend schräg verlaufen, um eine überall flächige Anlage des Anschlagkopfes 21 an den Nutseitenwänden 23 sicher zu stellen. Eine solche Gestaltung des Anschlagkopfes 21 vergrößert zugleich dessen der Schulter 26 aufsitzende Stirnfläche 21.2 und verbessert dadurch die Verdrehsicherung für den Anschlagkopf 21.

**Patentansprüche**

1. Bohrfutter mit einem an eine Bohrspindel (1) anschließbaren Futterkörper (2), in dem zur Bildung einer Aufnahme (9) für das Bohrwerkzeug Futterbacken (8) geführt sind, die durch einen am Futterkörper (5) drehbar und axial unverschiebbar geführten Stellring (13) verstellbar sind, und mit einer am Futterkörper (5) axial verschiebbaren und in Drehrichtung feststellbaren Sperrhülse (18) zum Verriegeln des Stellringes (13), wobei die Sperrhülse (18) in Verschiebungsrichtung gegen den Stellring (13) unter der Kraft einer Feder (20) steht und am Fusterkörper (5) mindestens ein Anschlagkopf (21) vorgesehen ist, der in eine Aussparung in der Wand der Sperrhülse (18) greift, insbesondere Bohrfutter (2), dessen Futterkörper (5) einen in der Aufnahme (9) für das Bohrwerkzeug mündenden axialen Durchgang (10) aufweist, durch den hindurch beim Schlagbohren die Schlagwirkung von der Bohrspindel (1) unmittelbar auf das in der Aufnahme (9) befindliche Ende des Bohrwerkzeugs übertragbar ist, dadurch gekennzeichnet, daß die Aussparung in der Wand der Sperrhülse (18) aus zwei nebeneinander verlaufenden, verschieden langen axialen Nuten (22.1, 22.2) gebildet ist, die an den dem Stellring (13) zugewandten Ende für den Eintritt des Anschlagkopfes (21) offen sind, wozu die Sperrhülse (18) auf dem Futterkörper (5) so verdrehbar ist, daß entweder die eine oder die andere der beiden Nuten (22.1, 22.2) mit dem Anschlagkopf (21) axial fluchtet.

2. Bohrfutter nach Anspruch 1, dadurch gekennzeichnet, daß der Anschlagkopf (21) in Langsrichtung der Nuten (22.1, 22.2) stegartig verlangert ist und mit seinen Steglängsseiten (21.1) Anschlagflächen fur die Nutseitenwände (23) bildet.

3. Bohrfutter nach Anspruch 1 oder 2, dadurch gekennzeichnet, daß der Anschlagkopf (21) das Ende eines Stiftes (24) bildet, der radial in den Futterkorper (5) eingesteckt ist und den Anschlagkopf (21) am Futterkörper (5) verankert.

4. Bohrfutter nach Anspruch 3, dadurch gekennzeichnet, daß der Anschlagkopf (21) am bohrerseitigen Ende eine ebene Stirnfläche (21.2) aufweist, mit der er einer Schulter (26) des Futterkorpers (5) verdrehungssicher aufsitzt.

5. Bohrfutter nach einem der Ansprüche 1 bis 4, dadurch gekennzeichnet, daß die längere (22.2) der beiden Nuten an beiden Enden axial offen ist.

6. Bohrfutter nach einem der Ansprüche 1 bis 5, dadurch gekennzeichnet, daß die Nuten (22.1, 22.2) an ihrem bohrerseitigen Ende eine freie Querverbindung (27) aufweisen, deren Hohe in Längsrichtung der Nuten (22.1, 22.2) geringer als die Steglänge des Anschlagkopfes (21) ist.

7. Bohrfutter nach Anspruch 6, dadurch gekennzeichnet, daß die die der Querverbindung (27) beidseits gegenüber liegenden Teile (28) der äußeren Seitenwand (23) beider Nuten (22.1, 22.2) den Drehbereich der Sperrhülse (18) begrenzende Anschläge für den Anschlagkopf (21) bilden.

8. Bohrfutter nach einem der Ansprüche 1 bis 7, dadurch gekennzeichnet, daß die Nuten (22.1, 22.2) an ihrem bohrerseitigen Ende keilartig auseinander laufende und dadurch Führungsflachen für den Anschagkopf (21) bildende Nutseitenwände (23) aufweisen, und daß der Anschlagkopf (21) mit entsprechend schräg verlaufenden Steglängsseiten (21.1) versehen ist.

## Claims

1. A drilling chuck comprising a chuck body (2) which can be connected to a drilling spindle (1) and in which chuck jaws (8) are guided to form a receiving means (9) for the drilling tool, which chuck jaws are displaceable by an adjusting ring (13) which is carried axially immovably and rotatably on the chuck body (5), and comprising a locking sleeve (18) which is axially displaceable on the chuck body (5) and which can be fixed in the rotational direction, for locking the adjusting ring (13), wherein the locking sleeve (18) is subjected to the force of a spring (20) in the direction of displacement towards the adjusting ring (13) and provided on the chuck body (5) is at least one abutment head (21) which engages into a recess in the wall of the locking sleeve (18), in particular a drilling chuck (2) whose chuck body (5) has an axial passage (10) which opens in the receiving means (9) for the drilling tool and through which, in the hammer drilling mode, the hammer action can be transmitted from the drilling spindle (1) directly on to the end of the drilling tool whioh is in the receiving means (9), characterised in that the recess in the wall of the looking sleeve (18) is formed from two axial grooves (22.1, 22.2) which extend in juxtaposed relationship and which are of different lengths and which are open at the end towards the adjusting ring (13), for entry of the abutment head (21), for which purpose the locking sleeve (18) can be turned on the chuck body (5) in such a way that either one or the other of the two grooves (22.1, 22.2) axially aligns with the abutment head (21).

2. A drilling chuck according to claim 1 characterised in that the abutment head (21) is increased in length in a limb-like configuration in the longitudinal direction of the grooves (22.1, 22.2) and with the longitudinal sides (21.1) of its limb forms abutment surfaces for the groove side walls (23).

3. A drilling chuck according to claim 1 or claim 2 characterised in that the abutment head (21) forms the end of a pin (24) which is fitted radially into the chuck body (5) and anchors the abutment head (21) to the chuck body (5).

4. A drilling chuck according to claim 3 characterised in that the abutment head (21) is provided at the end towards the drill with a flat end face (21.2) with which it sits non-rotatably on a shoulder (26) of the chuck body (5).

5. A drilling chuck according to one of claims 1 to 4 characterised in that the longer (22.2) of the two grooves is axially open at both ends.

6. A drilling chuck according to one of claims 1 to 5 characterised in that at their ends towards the drill the grooves (22.1, 22.2) have a free transverse connection (27) whose height in the longitudinal direction of the grooves (22.1, 22.2) is less than the length of the limb of the abutment head (21).

7. A drilling chuck according to claim 6 characterised in that the parts (28), which are in opposite relationship to the transverse connection (27) on both sides, of the outer side walls (23) of both grooves (22.1, 22.2) form abutments for the abutment head (21), which delimit the range of rotary movement of the locking sleeve (18).

8. A drilling chuck according to one of claims 1 to 7 characterised in that at their end towards the drill the grooves (22.1, 22.2) have groove side walls (23) which diverge in a wedge-like configuration and thereby form guide surfaces for the abutment head (21) and that the abutment head (21) is provided with correspondingly inclinedly extending longitudinal sides (21.1).

## Revendications

1. Mandrin de serrage comprenant un corps de mandrin (2) pouvant être raccordé à une broche de perçage (1) dans lequel sont guidées des mâchoires de mandrin (8) destinées à former un logement (9) pour l'outil de perçage, qui peuvent être déplacées au moyen d'une bague de réglage (13) guidée sur le corps de mandrin (5) de façon à pouvoir tourner tout en restant bloquées dans le sens axial, et une douille d'arrêt (18) qui peut être déplacée axialement sur le corps de mandrin (5) et bloquée dans la direction de rotation en vue du verrouillage de la bague de réglage (13), la douille d'arrêt (18) étant soumise à la force d'un ressort (20) dans le sens de déplacement en direction de la bague de réglage (13), et sur le corps de mandrin (5) étant prévue au moins une tête de butée (21) qui s'engage dans un évidement dans la paroi de la douille d'arrêt (18); en particulier un mandrin de serrage (2) dont le corps de mandrin (5) présente un passage axial qui débouche dans le logement (9) pour la fixation de l'outil de perçage et par lequel le mouvement de percussion peut être transmis directement, pour le perçage à percussion, de la broche de perçage (1) à l'extrémité du foret maintenu dans le logement (9), caractérisé par le fait que l'évidement dans la paroi de la douille d'arrêt (18) est constitué par deux rainures axiales (22.1, 22.2) s'étendant côte à côte sur des longueurs différentes et ouvertes à l'extrémité dirigée vers la bague de réglage (13) pour permettre l'engagement de la tête de butée (21), la douille d'arrêt (18) pouvant être tournée à cet effet sur le corps de mandrin (5) de telle façon que l'une ou l'autre des deux rainures (22.1, 22.2) soit alignée axialement avec la tête de butée (21).

2. Mandrin de serrage selon la revendication 1, caractérisé par le fait que la tête de butée (21) est prolongée en forme de nervure dans le sens longitudinal des rainures (22.1, 22.2) et qu'elle forme, avec les faces longitudinales (21.1) de la nervure, des surfaces d'arrêt pour les parois latérales des rainures (23).

3. Mandrin de serrage selon l'une des revendications 1 ou 2, caractérisé par le fait que la téte de butée (21) constitue l'extrémité d'une

**0 164 516**

cheville (24) qui est engagée radialement dans le corps de mandrin (5) et bloque la tête de butée (21) sur le corps de mandrin (5).

4. Mandrin de serrage selon la revendication 3, caractérisé par le fait que la tête de butée (21) présente, à l'extrémité du côté foret, une face frontale plane (21.2) avec laquelle elle repose de manière rigide en torsion sur un épaulement (26) du corps de mandrin (5).

5. Mandrin de serrage selon l'une quelconque des revendications 1 à 4, caractérisé par le fait que la plus longue (22.2) des deux rainures est axialement ouverte aux deux extrémités.

6. Mandrin de serrage selon l'une quelconque des revendications 1 à 5, caractérisé par le fait que les rainures (22.1, 22.2) présentent, à l'extrémité du côté foret, une liaison transversale libre (27) dont la hauteur dans le sens longitudinal des rainures (22.1, 22.2) est inférieure à la longueur de nervure de la tête de butée (21).

7. Mandrin de serrage selon la revendication 6, caractérisé par le fait que les parties (28) de la paroi latérale extérieure (23) des deux rainures (22.1, 22.2) disposées de part et d'autre en face de la liaison transversale (27) constituent des butées pour la tête de butée (21) qui limitent le domaine de rotation de la douille d'arrêt (18).

8. Mandrin de serrage selon l'une quelconque des revendications 1 à 7, caractérisé par le fait que les rainures (22.1, 22.2) présentent, à l'extrémité du côté foret, des parois latérales (23) qui s'écartent en forme de coin et constituent de ce fait des surfaces de guidage pour la tête de butée (21), et que la tête de butée (21) présente des faces longitudinales de nervure (21.1) inclinées en conséquence.

Fig.3

Fig.1

Fig. 2